# EUROPEAN PATENT APPLICATION

(11) **EP 4 275 558 A1**
(43) Date of publication of application: **15.11.2023**
(21) Application number: 23165492.2
(22) Date of filing: 30.03.2023
(51) Int. Cl.: A47J 31/18

(54) **A COFFEE MAKER AND CONTROL METHOD THEREOF**

(30) Priority: 13.05.2022 TR 202207779
(71) Applicant: Arçelik Anonim Sirketi, 34445 Istanbul (TR)
(72) Inventor: ALTUNTAS, HAKAN, 34445 ISTANBUL (TR); DONERKAYALI, ARDA, 34445 ISTANBUL (TR); GUNDOGMUS, TULAY, 34445 ISTANBUL (TR)

(57) **Abstract**

The present invention relates to a coffee maker (1) comprising a body (2); at least one brewing chamber (3) which is provided in the body (2); at least one brewing pot (4) wherein water, coffee and similar materials are put and which is placed into the brewing chamber (3); at least one heater (5) which is disposed on the base of the brewing chamber (3) and which heats the brewing pot (4); and at least one sensor (6) which measures the temperature of the outer surface of the brewing pot (4) without any contact. Thus, the temperature of the outer surface of the brewing pot is measured without any contact and the temperature of the mixture in the brewing pot is calculated.

## Description

The present invention relates to a coffee maker which is especially used for brewing Turkish coffee and wherein the brewing pot is placed into a brewing chamber in the body by the user.

In the traditional brewing method of Turkish coffee, the mixture of coffee and water is brewed in the coffee pot until boiling temperature and the brewing process is ended when the rising foam reaches an ideal height. In coffee makers used especially for the preparation of Turkish coffee, the level of the coffee and water mixture is measured with an optical distance sensor with infrared wavelength. The distance sensor is positioned above the brewing pot. The distance between said point and the upper surface of the mixture in the brewing pot is measured. The brewing process is terminated according to the level change information from the distance sensor during rising. In this method, since the distance measuring sensor is placed above the brewing pot, effects such as the steam generated due to the heating of the coffee and water mixture during the brewing process and the condensation of this steam on the sensor protective glass, overheating and contamination of the sensor area cause the sensor to not measure correctly and adversely affect the quality of the coffee prepared. Moreover, with the infrared distance sensor used in existing Turkish coffee makers, it is not possible for different beverage mixtures such as milk, coffee with milk, and instant coffee to reach the desired temperature and the end of the brewing cannot be detected.

In the state of the art International Patent Application No. WO2019038172, the temperature of the upper surface of the mixture is measured without any contact by means of an infrared temperature sensor for a coffee maker. When the mixture temperature reaches the predetermined temperature value, the heater is turned off.

In the state of the art International Patent Application No. WO2011002421, the temperature of the mixture in the brewing pot is measured with direct contact by means of an NTC sensor for coffee maker. The temperature of the coffee is monitored, and upon reaching 90 degrees, the brewing process is terminated. In this document, components such as connectors, cables, etc. are needed on the brewing pot. This makes the production and usability of the brewing pot difficult and creates negative effects such as contamination of the sensor and inability to clean the same easily.

The aim of the present invention is the realization of a coffee maker wherein the user places the brewing pot into a brewing chamber in the body.

The coffee maker realized in order to attain the aim of the present invention, explicated in the first claim and the respective claims thereof, comprises at least one brewing pot wherein water, coffee and similar materials are put and which is placed into the brewing chamber; at least one heater which is disposed on the base of the brewing chamber and which heats the brewing pot; a control unit which enables the heater to be turned on and off; and a sensor which measures the temperature of the outer surface of the brewing pot without any contact. Thus, the temperature of the outer surface of the brewing pot is measured without any contact and the temperature of the mixture in the brewing pot is calculated.

In an embodiment of the present invention, the sensor is placed on the body, into the brewing chamber.

In another embodiment of the present invention, the sensor is an infrared sensor.

The Turkish coffee maker, wherein the sensor of the present invention is used, operates according to a control method wherein the temperature of the mixture in the brewing pot is determined by a function dependent to the temperature of the brewing pot and the internal temperature of the sensor. According to said control method, the temperature of the outer side surface of the brewing pot is measured without any contact by means of the sensor placed on the body. The temperature of the brewing mixture is calculated as the solution of a function dependent on the brewing pot temperature and the internal temperature of the sensor. By calculating the temperature of the mixture in the brewing pot from the temperature of the brewing pot and the mixture therein and reaching the predetermined brewing pot temperature, it is detected that the mixture in the brewing pot is brewed and rose.

By means of the present invention, since the position of the sensor is changed with respect to the state of the art position, effects such as steam, condensation, temperature and dirt which may damage the sensor and prevent the sensor from performing detections correctly are avoided. Thus, since the sensor is not exposed to external factors, consistency is ensured in the quality of the prepared coffee. Moreover, the freedom of choice in the design of the Turkish coffee maker is increased, since the necessity of placing the sensor on the brewing pot is eliminated.

Furthermore, the present invention enables the brewing of mixtures such as coffee with milk, instant coffee, etc. in addition to coffee and to detect the temperature correctly and control the same.

By using the infrared temperature sensor, the temperature of the mixture in the brewing pot is calculated by measuring the temperature of the outer surface of the brewing pot without any contact, and the heater is controlled according to said measured temperature value. Since the measurement is performed without any contact, the sensor is prevented from being affected by any environmental effects such as dirt, moisture, steam, etc. The surface on which the sensor is disposed is manufactured completely flat or in a geometry suitable for the structure of the brewing pot. It does not cause any negative effects which may affect the quality, taste and foam of the coffee.

A coffee maker realized in order to attain the aim of the present invention is illustrated in the attached figures, where:
Figure 1 - is the perspective view of a coffee maker.
Figure 2 - is the sideways view of the coffee maker.
Figure 3 - is the sideways cross-sectional view of the coffee maker.

The elements illustrated in the figures are numbered as follows:
1. Coffee maker
2. Body
3. Brewing chamber
4. Brewing pot
5. Heater
6. Sensor
7. Control unit
8. Opening

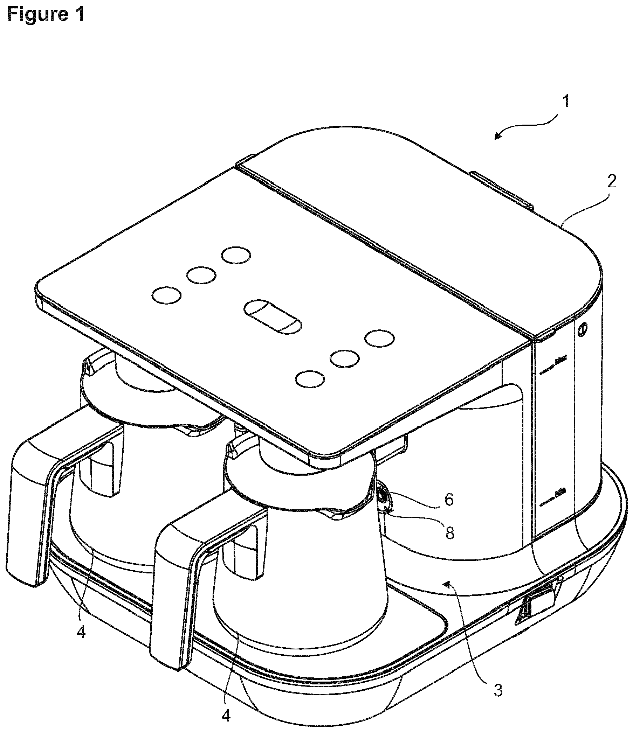

The coffee maker (1) comprises a body (2); at least one brewing chamber (3) which is provided in the body (2); at least one brewing pot (4) wherein water, coffee and similar materials are put and which is placed into the brewing chamber (3); at least one heater (5) which is disposed on the base of the brewing chamber (3) and which heats the brewing pot (4); and at least one sensor (6) which measures the temperature of the outer surface of the brewing pot (4) without any contact. Thus, the temperature of the outer surface of the brewing pot (4) is measured without any contact and the temperature of the mixture in the brewing pot is calculated (Figure 1).

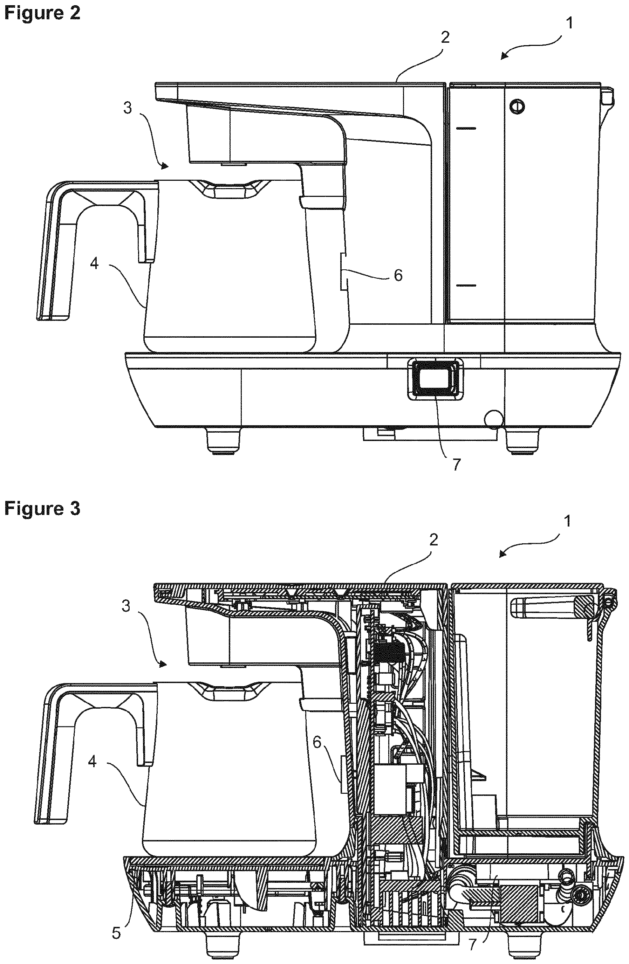

In an embodiment of the present invention, the sensor (6) is placed on the body (2), into the brewing chamber (3). In the preferred embodiment of the present invention, the sensor (6) is placed on the back wall of the brewing chamber (3) so as to see the side wall of the brewing pot (4) (Figure 2 and Figure 3).

In another embodiment of the present invention, the coffee maker (1) comprises an opening (8) which is arranged on the back wall of the brewing chamber (3) and wherein the sensor (6) is placed. The sensing part of the sensor (6) extends through this opening (8) into the brewing chamber (3) so as to see the side wall of the brewing pot (4).

In another embodiment of the present invention, the sensor (6) is an infrared sensor.

The coffee maker, wherein the sensor (6) of the present invention is used, comprises a control unit (7) which operates according to a control method wherein the temperature of the mixture in the brewing pot (4) is determined by a function dependent to the temperature of the brewing pot (4) and the internal temperature of the sensor (6). According to said control method, the temperature of the outer side surface of the brewing pot (4) is measured without any contact by means of the sensor (6) placed on the body (2). The temperature of the brewing mixture is calculated as the solution of a function dependent on the brewing pot (4) temperature and the internal temperature of the sensor (6). By calculating the temperature of the mixture in the brewing pot (4) from the temperature of the brewing pot (4) and the mixture therein and reaching the predetermined brewing pot (4) temperature, it is detected that the mixture in the brewing pot (4) is brewed and rose. Thus, by using the heat transfer between the brewing pot (4) and the mixture in the brewing pot (4), the temperature of the mixture is calculated and the heater (5) is enabled to be controlled accordingly.

In the coffee maker (1) of the present invention, the user puts water and coffee - for example Turkish coffee - into the brewing pot (4), and places the brewing pot (4) into the brewing chamber (3). When the brewing process is started, the heater (5) under the brewing chamber (3) starts to operate and heats the brewing pot (4) and/or the mixture in the brewing pot (4). By means of the sensor (6) placed in the brewing chamber (3), the temperature of the outer wall of the brewing pot (4) is continuously measured and controlled by the control unit (7). When the temperature of the outer wall of the brewing pot (4) reaches the temperature value predetermined by the manufacturer, it is decided that the mixture in the brewing pot (4) is brewed and rose, and the heater (5) is stopped by the control unit (7). Thus, based on the principle of heat transfer between the brewing pot (4) and the mixture therein, the temperature of the brewing pot (4) is detected by means of the sensor (6) without any contact, and coffee is prepared without any level measurement directly.

By means of the present invention, since the position of the sensor (6) is changed with respect to the state of the art position, effects such as steam, condensation, temperature and dirt which may damage the sensor (6) and prevent the sensor (6) from performing detections correctly are avoided. Thus, since the sensor (6) is not exposed to external factors, consistency is ensured in the quality of the prepared coffee. Moreover, the freedom of choice in the design of especially the Turkish coffee maker (1) is increased, since the necessity of placing the sensor (6) on the brewing pot (4) is eliminated.

Furthermore, the present invention enables the brewing of mixtures such as coffee with milk, instant coffee, etc. in addition to coffee and to detect the temperature correctly and control the same.

In order to detect whether coffee or a similar food mixture is brewed in the coffee maker (1), the temperature of the outer side surface of the brewing pot (4) is measured by using an infrared temperature sensor (6) placed on the body (2) without any contact, and the temperature of the mixture in the brewing pot (4) is calculated. Since the measurement is performed without any contact, the sensor (6) is prevented from being affected by any environmental effects such as dirt, moisture, steam, etc. The surface on which the sensor (6) is disposed is manufactured completely flat or in a geometry suitable for the structure of the brewing pot (4). The sensor (6) is effectively positioned without causing any negative effects which may affect the coffee quality, taste and foam.

## Claims

1. A coffee maker (1) **comprising** a body (2); at least one brewing chamber (3) which is provided in the body (2); at least one brewing pot (4) wherein water, coffee and similar materials are put and which is placed into the brewing chamber (3); and at least one heater (5) which is disposed on the base of the brewing chamber (3) and which heats the brewing pot (4); **characterized by** at least one sensor (6) which measures the temperature of the outer surface of the brewing pot (4) without any contact.

2. A coffee maker (1) as in Claim 1, **characterized by** the sensor (6) which is placed on the body (2), into the brewing chamber (3).

3. A coffee maker (1) as in Claim 1 or 2, **characterized by** the sensor (6) which is placed on the back wall of the brewing chamber (3) so as to see the side wall of the brewing pot (4).

4. A coffee maker (1) as in Claim 3, **characterized by** an opening (8) which is arranged on the back wall of the brewing chamber (3) and wherein the sensor (6) is placed.

5. A coffee maker (1) as in any one of the above claims, **characterized by** the sensor (6) which is an infrared sensor.

6. A coffee maker (1) as in Claim 1, **characterized by** a control unit (7) which operates according to a control method wherein the temperature of the mixture in the brewing pot (4) is determined by a function dependent to the temperature of the brewing pot (4) and the internal temperature of the sensor (6).

7. A coffee maker (1) control method for a coffee maker (1) as in any one of the above claims, wherein the temperature of the brewing mixture is calculated as the solution of a function dependent on the brewing pot (4) temperature and the internal temperature of the sensor (6).

8. A coffee maker (1) control method as in Claim 7, comprising the steps of constantly measuring the temperature of the outer wall of the brewing pot (4) and controlling the same by the control unit (7), and stopping the operation of the heater (5) by deciding by the control unit (7) that the mixture in the brewing pot (4) is brewed and rose when the temperature of the outer wall of the brewing pot (4) reaches the temperature value predetermined by the manufacturer.
